# FASCICULE DE BREVET EUROPEEN

(11) **EP 4 474 543 B1**
(45) Date de publication et mention de la délivrance du brevet: **13.05.2026**
(21) Numéro de dépôt: 24180264.4
(22) Date de dépôt: 05.06.2024
(51) Int. Cl.: D03C 5/02, F16B 5/04, F16B 19/06

(54) **LEVIER DE SORTIE À GALETS SUIVEURS D'UNE MÉCANIQUE D ARMURE À CAMES ET SON PROCÉDÉ DE FABRICATION**
AUSGANGSHEBEL MIT NACHLAUFROLLEN EINES EXZENTERANTRIEBS UND VERFAHREN ZU SEINER HERSTELLUNG
FOLLOWER ROLLER OUTPUT LEVER OF A CAM GEAR MECHANISM AND METHOD FOR MANUFACTURING SAME

(30) Priorité: 06.06.2023 FR 2305667
(43) Date de publication de la demande: 11.12.2024
(73) Titulaire: Staubli Faverges, 74210 Faverges-Seythenex (FR)
(72) Inventeur: BONNEAU, David, 74210 LATHUILE (FR); LEGER, Sylvain, 74000 ANNECY (FR); PORRET, Robin, 74230 DINGY SAINT CLAIR (FR)
(74) Mandataire: Lavoix

(56) Documents cités:
- CN-U- 203 807 652
- DE-A1- 102018 117 387
- DE-A1- 2 345 017
- DE-U1- 29 908 928

## Description

La présente invention concerne un levier de sortie à galets suiveurs utilisé dans une mécanique d'armure à cames ainsi qu'à un procédé de fabrication d'un tel levier.

Dans le domaine des métiers à tisser, on connaît les mécaniques d'armure à cames qui comprennent une série de leviers oscillants en nombre égal à celui des cadres de lisses du métier à tisser. Chaque levier oscillant est prévu pour être attelé à l'un des cadres de lisses et est équipé de deux galets qui coopèrent avec les deux pistes d'une came complémentaire entraînée en rotation par un arbre commun. Les deux pistes d'une même came sont décalées axialement et les galets portés par le levier de sortie associé doivent avoir le même décalage axial que les pistes de la came.

Au cours du fonctionnement, seul un des galets du levier de sortie est sollicité à chaque instant. Du fait du décalage axial du galet sollicité, le levier de sortie est soumis à des contraintes mécaniques importantes, qui peuvent entraîner des déformations de certains éléments du levier, en particulier les éléments recevant les galets.

Pour limiter ces déformations, il est connu, par exemple de CN-203 807 652-U de monter les galets entre un flasque usiné dans l'épaisseur du corps de levier et un flasque rapporté, fixé au corps de levier par l'intermédiaire d'un rivet déformable.

Par ailleurs, il est connu de WO2005/098106A1 que les galets peuvent être montés entre deux flasques rapportés sur le corps de levier, un des flasques étant placé dans un logement creux d'une surface latérale du corps de levier. Les flasques rapportés sont fixés au moyen de rivets déformables.

Le montage des flasques sur le corps de levier nécessite une étape de pré-perçage des leviers et des flasques pour pouvoir y insérer les rivets déformables. Cette étape de pré-perçage et l'utilisation de rivets déformables créent un jeu qui est défavorable à l'assemblage des flasques sur le corps de levier, à la précision du positionnement des galets, qui fragilise la liaison entre les flasques et le corps de levier et qui perturbe la cinématique d'entraînement des leviers. Les documents DE-299 08 928-U1, DE-10 2018 117387-A1 et DE-23 45 017-A1 décrivent d'autres méthodes d'assemblage mécanique.

C'est à ces inconvénients qu'entend plus particulièrement remédier l'invention en proposant un nouveau levier à galets suiveurs qui permet un assemblage rigide et sans jeu des flasques sur le corps de levier.

À cet effet, l'invention a pour objet un levier de sortie à galets suiveurs selon la revendication 1.

Grâce à l'invention, les rivets munis d'une gorge et les empreintes d'enfoncement des éléments assemblées parmi le flasque intérieur et le flasque extérieur, permettent un assemblage précis des flasques extérieurs aux flasques intérieurs du levier. Egalement grâce à l'invention, un procédé d'assemblage au moyen de rivets munis d'une gorge et l'enfoncement de la portion du premier ou deuxième élément permettent de solidariser les flasques extérieurs et les flasques intérieurs. L'empreinte d'enfoncement permet de disposer, au sein du premier ou du deuxième élément, d'assez de matière pour constituer la portion engagée dans la gorge d'un rivet. L'élément dans lequel est inséré le rivet épouse parfaitement la forme du rivet et la coopération entre la gorge périphérique du rivet et la portion du premier ou deuxième élément reçue dans cette gorge assure un ancrage efficace du rivet dans cet élément. L'utilisation de rivets avec gorge et de bourrelets formés par une portion de matière correspondant à une empreinte d'enfoncement qui permet d'obtenir un levier à galets suiveurs ayant une bonne tenue mécanique et qui assure un fonctionnement optimal de la mécanique d'armure à cames.

Suivant d'autres aspects avantageux de l'invention, le levier de sortie à galets suiveurs comprend une ou plusieurs des caractéristiques qui sont décrites aux revendications dépendantes et qui peuvent être prises isolément ou suivant toutes les combinaisons techniquement possibles.

L'invention concerne également un procédé de fabrication d'un levier de sortie comme décrit ci-dessus, le procédé étant conforme à la revendication 19.

Suivant d'autres aspects avantageux de l'invention, le procédé de fabrication d'un levier de sortie comprend une ou plusieurs des caractéristiques qui sont décrites aux revendications dépendantes et qui peuvent être prises isolément ou suivant toutes les combinaisons techniquement possibles.

L'invention apparaîtra plus clairement à la lecture de la description qui va suivre, donnée uniquement à titre d'exemple non limitatif, et faite en référence aux dessins dans lesquels :
- [Fig. 1] la figure 1 est une représentation schématique partielle de principe d'un métier à tisser comprenant un levier de sortie conforme à l'invention ;
- [Fig. 2] la figure 2 est une vue à plus grande échelle du détail II de la figure 1, l'insert A) correspondant à une vue de face et l'insert B) à une vue en perspective ;
- [Fig. 3] la figure 3 est une coupe partielle selon la ligne III-III à la figure 2 ;
- [Fig 4] la figure 4 est une vue à plus grande échelle du détail IV à la figure 3 ;
- [Fig. 5] la figure 5 est une vue analogue à l'insert A) de la figure 2, la came et les galets étant omis ;
- [Fig. 6] la figure 6 est une représentation schématique de principe des étapes d'un procédé de fabrication conforme à l'invention ;
- [Fig. 7] la figure 7 est une vue analogue à l'insert B) de la figure 2 pour un levier conforme à un second mode de réalisation de l'invention.

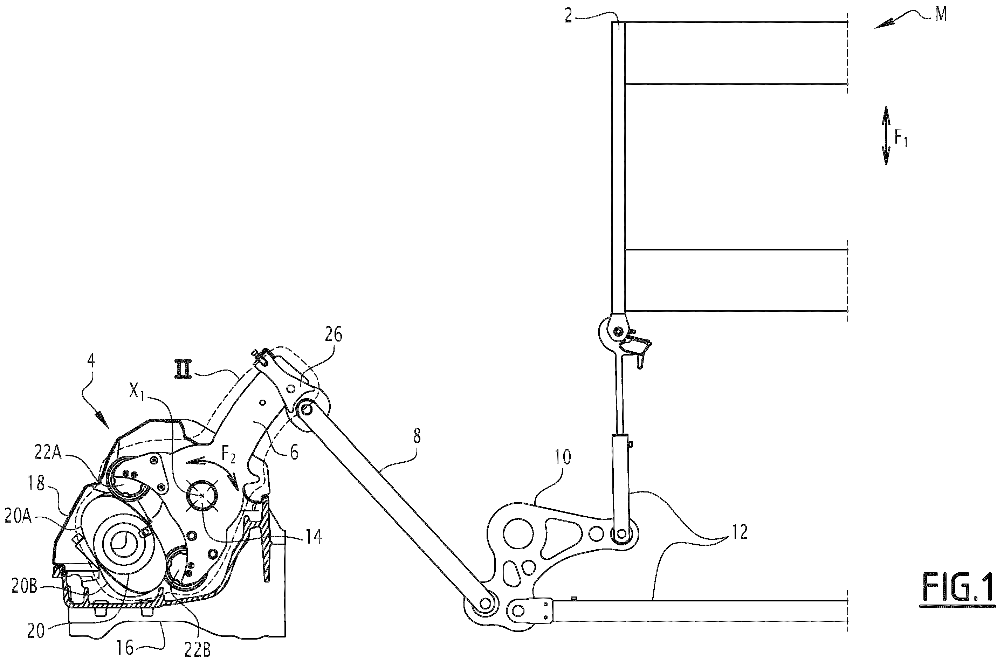

Le métier à tisser M représenté à la figure 1 comprend plusieurs cadres de lisses 2 dont un seul est représenté. Les différents cadres de lisses 2 du métier M sont animés d'un mouvement d'oscillations verticales représenté par la double flèche F1 et imprimé par une mécanique d'armure à cames 4. Les leviers de sortie 6 de la mécanique d'armure à cames 4, dont un seul est représenté, entrainent chacun un mécanisme de tirage qui actionne un cadre de lisses 2 respectif et qui est constitué d'une bielle de transmission 8 associée à des leviers coudés 10 reliés entre eux et au cadre de lisses 2 correspondant par des bielles 12.

Les leviers 6 sont prévus en nombre équivalent au nombre de cadre de lisses 2 et montés pivotants, comme représenté par la double flèche F2, autour d'un arbre des leviers 14 soutenu par le bâti 16 de la mécanique à cames 4 et protégé par un capot 18. L'arbre des leviers 14 définit un axe principal X1 de la mécanique d'armure à cames 4. Chaque levier de sortie 6 est placé le long de l'arbre des leviers 14 dans une division dont la largeur est fixe et égale à 12 millimètres.

L'arbre des leviers 14 comporte dix divisions.

La mécanique d'armure à cames 4 comporte plusieurs cames complémentaires 20 dont une seule est représentée et qui définissent chacune deux pistes conjuguées 20A et 20B sur lesquelles viennent respectivement en appui deux galets suiveurs 22A et 22B supportés par un levier de sortie 6.

Chaque levier de sortie 6 comprend un corps plat 24 en acier. Le corps plat 24 est découpé dans une tôle d'épaisseur constante. Le corps plat 24 supporte à son extrémité 24A une agrafe 26 permettant de relier le levier de sortie 6 à la bielle de transmission 8.

Le corps plat 24 définit un alésage 24B de montage sur l'arbre des leviers 14. Comme illustré sur l'exemple des figures, l'alésage 24B reçoit un roulement à rouleaux 28. Dans des variantes non représentées, l'alésage 24B reçoit un roulement à billes ou un coussinet.

Le corps plat 24 comprend aussi une première face externe 24C et une deuxième face externe 24D. Les faces externes 24C et 24D sont opposées et définissent entre elle un plan médian P1 perpendiculaire à l'axe principal X1. Le corps plat 24 comprend aussi une tranche 24E, qui relie la première face externe 24C à la deuxième face externe 24D. La hauteur de la tranche 24E mesurée parallèlement à l'axe X1 définit l'épaisseur du corps plat 24.

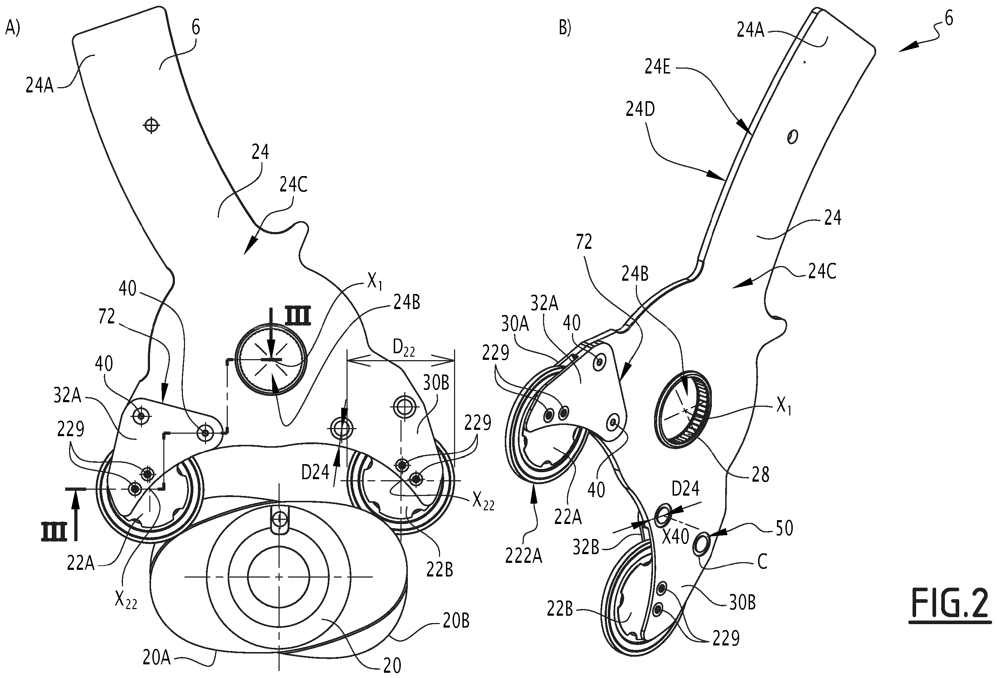

Le corps plat 24 comprend aussi un premier flasque intérieur 30A monobloc avec le corps plat 24. Un premier flasque extérieur 32A est rapporté sur la première face externe 24C du corps plat 24 en regard du premier flasque intérieur 30A. Le premier flasque extérieur 32A est positionné directement sur le corps plat 24, sans entretoise. Le premier flasque extérieur 32A fixé au corps plat 24 au moyen de rivets 40, qui sont décrits plus loin. Le premier flasque extérieur 32A est formé dans une pièce d'acier d'épaisseur constante, cette épaisseur étant mesurée selon l'axe principal X1 lorsque le flasque extérieur 32A est solidaire du corps plat 24. Le premier flasque extérieur 32A est de forme triangulaire arrondie visible à l'insert A) de la figure 2.

Le premier galet suiveur 22A est pris en chape dans un premier espace ménagé entre le premier flasque extérieur 32A et le premier flasque intérieur 30A. Selon un aspect de l'invention détaillé plus loin, au cours de la fabrication du levier 6, le premier flasque extérieur 32A est fixé au corps plat 24 avant qu'une portion du premier flasque extérieur 32A et qu'une portion du corps plat 24 ne soient conjointement usinées pour ménager le premier espace recevant le premier galet suiveur 22A.

Le corps plat 24 comprend un deuxième flasque intérieur 30B monobloc avec le corps plat 24. Un deuxième flasque extérieur 32B est rapporté sur la deuxième face externe 24D du corps plat 24 en regard du deuxième flasque intérieur 30B. Le deuxième flasque extérieur 32B est analogue au premier flasque extérieur 32A. Le deuxième flasque extérieur 32B est positionné directement sur le corps plat 24, sans entretoise. Le deuxième flasque extérieur 32B est une pièce d'acier, d'épaisseur constante et de forme triangulaire arrondie.

Le deuxième galet suiveur 22B est pris en chape dans un deuxième espace ménagé entre le deuxième flasque extérieur 32B et le deuxième flasque intérieur 30B.

Le premier galet suiveur 22A et le deuxième galet suiveur 22B présentent avantageusement la même structure, voire sont identiques. On décrit principalement ci-dessous le galet suiveur 22A, cette description étant transposable au galet 22B.

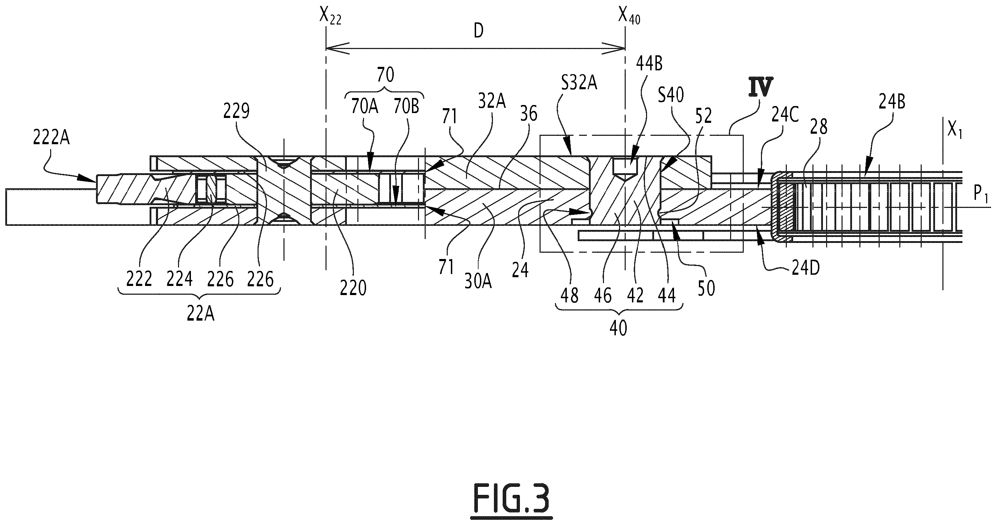

Le galet suiveur 22A, dont l'ensemble des éléments sont visibles sur la figure 3, comprend une bague intérieure 220 qui présente une forme de disque centré sur un axe de galet X22, une bague extérieure 222 et des éléments roulants 224 interposés, radialement à l'axe de galet X22, entre les bagues intérieure 220 et extérieure 222, de manière que la bague extérieure 222 est libre en rotation par rapport à la bague intérieure 220 autour de l'axe de galet X22 correspondant. Lorsque le galet suiveur 22A est reçu dans l'espace ménagé entre le premier flasque extérieur 32A et le premier flasque intérieur 30A, dans une position de fonctionnement, l'axe de galet X22 est parallèle à l'axe principal X1.

Avantageusement, l'emploi de flasques intérieurs 30A et 30B monoblocs avec le corps plat 24 minimise les contraintes de cisaillement sur les rivets 40 et la torsion du flasque extérieur 32A / 32B, ce qui autorise la conception d'un rivetage plus proche des centres des galets 22A et 22B. Autrement dit, en fonctionnement de la mécanique à cames 4, les conditions de charge des rivets 40 sont divisées par deux lorsque les flasques intérieurs 30A / 30B sont monoblocs du corps plat 24 par rapport aux leviers de l'art antérieur, notamment tels les leviers décrits par WO-2005/098106-A1.

Les éléments roulants 224, qui sont dans l'exemple illustré des rouleaux, sont maintenus axialement par rapport à l'axe de galet X22 par deux flancs 226, en tôle, situés de part et d'autre de la bague intérieur 220 selon l'axe de galet X22.

La bague extérieure 222 présente une surface de contact 222A qui est radiale à l'axe de galet X22 et est configurée pour être au contact avec la piste 20A de la came 20.

Deux trous sont ménagés sur le flasque extérieur 32A, sur le flasque intérieur 30A, sur les flancs 226 du galet 22A et sur la bague intérieure 220 du galet 22A pour recevoir deux organes de fixation 229 du galet 22A au corps plat 24. Dans l'exemple illustré, les organes de fixation 229 sont des rivets dits « de galet ». Chaque rivet de galet 229 est centré sur un axe parallèle à l'axe de galet X22, chaque rivet de galet 229 est décalé radialement de l'axe de galet X22.

De préférence, deux rivets de galet 229 solidarisent chaque galet suiveur 22A, 22B au corps plat 24. Dans d'autres variantes non représentées, un rivet de galet 229 fixe chaque galet suiveur 22A, 22B au levier 6 ou plus de deux rivets de galet 229 solidarisent chaque galet suiveur 22A, 22B au levier 6.

Les galets suiveurs 22A, 22B présentent ici un diamètre extérieur D22 égal à 88 millimètres. Le diamètre extérieur D22 est le diamètre de la surface de contact 222A de chaque galet 22A, 22B.

Le premier flasque extérieur 32A et le deuxième flasque extérieur 32B sont solidarisés au corps plat 24 par des rivets 40. Dans ce mode de réalisation et selon un aspect avantageux mais non obligatoire de l'invention, les rivets 40 sont des rivets perforants. En d'autres termes, les rivets 40 sont capables de perforer les éléments dans lesquels ils sont positionnées sans se déformer eux-mêmes de façon significative. Pour ce faire, les rivets perforants 40 sont, dans l'exemple illustré, en acier trempé, alors que les flasques extérieurs 32A, 32B et le corps plat 24 sont en acier. Toute autre nuance d'acier ou d'alliages d'acier qui comprend par exemple du manganèse, du nickel, du carbone, du molybdène peuvent être utilisés pour réaliser un rivet perforant 40, sans sortir du cadre de l'invention, dans la mesure où ce rivet perforant 40 est moins ductile que les flasques extérieurs 32A, 32B et le corps plat 24. En comparaison, dans les leviers de l'art antérieur tels que décrits dans CN-203 807 652-U, les rivets de fixation des flasques sont réalisés en un acier plus ductile, autrement dit plus mou ou plus déformable, que les flasques extérieurs 32A, 32B et le corps plat 24. Les rivets de fixation employés dans l'état de l'art antérieur sont déformés dans les perçages des flasques si bien que la liaison est réalisée avec du jeu mécanique.

De manière avantageuse, les flasques extérieurs 32A et 32B présentent des géométries identiques et sont fixés de façon analogue par des rivets perforants 40 sur le corps plat 24.

On décrit principalement dans la suite le premier flasque extérieur 32A et un des rivets perforants 40, cette description étant transposable au deuxième flasque extérieur 32B et à l'ensemble des rivets perforants 40.

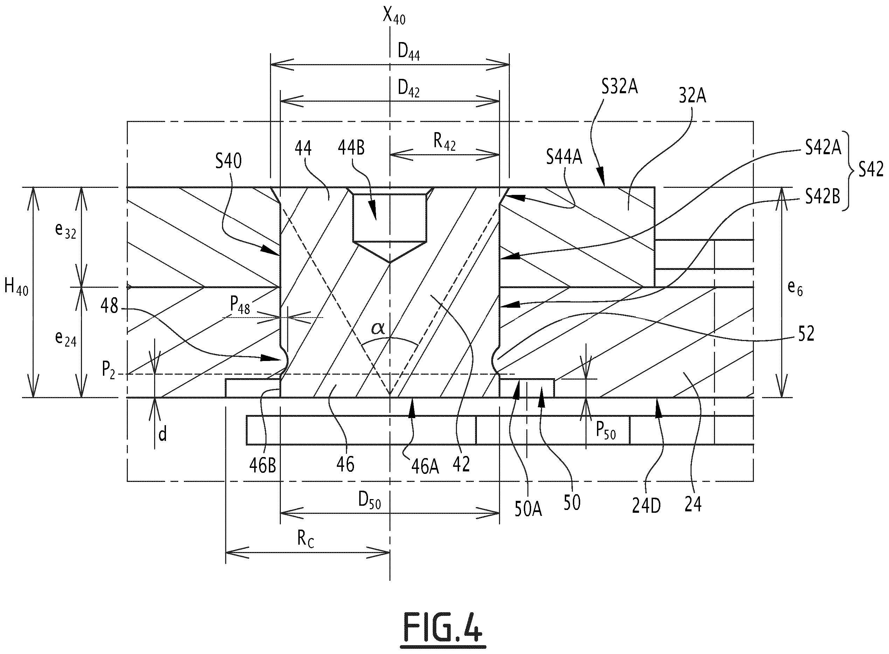

La structure et le positionnement des rivets perforants 40 sont représentés en détails sur les figures 3 et 4.

Comme visible à la figure 2, deux rivets perforants 40 fixent le flasque extérieur 32A sur le corps plat 24. En référence aux figures 3 et 4, chaque rivet perforant 40 définit une surface périphérique externe S40, de contact entre le rivet perforant 40 et les éléments dans lequel le rivet perforant 40 est inséré, et un axe de rivet X40. Lorsque le rivet 40 est mis en place dans les éléments 24 et 32A, l'axe de rivet X40 est parallèle à l'axe principal X1.

Le rivet 40 comprend un corps de rivet 42 en forme de solide de révolution autour de l'axe de rivet X40. Dans l'exemple illustré, le corps de rivet 42 est de forme globalement cylindrique. Dans une variante non représentée, le corps de rivet 42 est de forme tronconique.

Le rivet perforant 40 pénètre en premier dans le flasque extérieur 32A puis dans le corps plat 24 de sorte que le corps de rivet 42 s'étend le long de l'axe de rivet X40 entre une tête de rivet 44 affleurant sur une face externe S32A du flasque extérieur 32A et un pied de rivet 46 affleurant la face externe 24D du corps plat 24.

Dans une variante non représentée, le rivet perforant 40 pénètre en premier dans le corps plat 24, la tête de rivet 44 affleurant alors la face externe 24D du corps plat 24 et le pied de rivet 46 affleurant la face externe S32A du flasque extérieur 32A. De manière générale, on nomme premier élément, l'élément défini parmi le corps plat 24 et le flasque 32A, de telle sorte que la tête de rivet 44 affleure une face externe du premier élément, tandis que l'on nomme deuxième élément, l'élément défini de telle sorte que le pied de rivet 46 affleure une face externe du deuxième élément.

Dans une variante non représentée, le flasque intérieur 30A et/ou le flasque intérieur 30B sont rapportés sur le corps 24 du levier 6.

La hauteur H₄₀ du rivet perforant 40, mesurée parallèlement à l'axe de rivet X40, est égale à l'épaisseur cumulée du corps plat 24, ici d'épaisseur e₂₄ égale à 6 millimètres, et du flasque extérieur 32A, ici d'épaisseur e₃₂ égale à 5,5 millimètres, de telle sorte que le rivet perforant 40 ne dépasse pas du levier de sortie 6 et ainsi que l'épaisseur maximale e₆, mesurée selon l'axe principal X1, du levier de sortie 6 soit inférieure à la largeur d'une division de la mécanique d'armure à cames 4. Avantageusement la hauteur H₄₀ est plus petite que l'épaisseur e₂₄ de sorte que le risque d'interférence du rivet 40 avec les éléments voisins du levier 6 dans la mécanique à cames 4 est minimisé.

L'épaisseur maximale du levier de sortie 6 est de préférence configurée pour laisser un jeu suffisant entre les multiples leviers de sortie 6 de la mécanique d'armure à cames 4 pour éviter toute interférence en cours de fonctionnement, ce qui provoquerait une usure prématurée de la mécanique d'armure à cames 4.

Le corps de rivet 42 comprend une surface périphérique externe S42. Lorsque le rivet perforant 40 est positionné au sein du premier et du deuxième élément, le premier élément étant, dans l'exemple illustré, le flasque extérieur 32A et le deuxième élément étant le corps plat 24, la surface périphérique externe S42 du corps de rivet 42 comprend une première portion S42A de surface périphérique externe reçue dans le premier élément et une deuxième portion S42B de surface périphérique externe reçue dans le deuxième élément. La première portion S42A de surface périphérique externe et la deuxième portion S42B de surface périphérique externe sont concentriques et de même diamètre.

Le corps de rivet 42 présente un diamètre D₄₂. Le diamètre D₄₂ du corps de rivet 42 est aussi par définition le diamètre du rivet perforant 40. De manière générale, pour un élément donné présentant un diamètre, le rayon de cet élément est égal à la moitié du diamètre. Le diamètre D₄₂ du rivet perforant 40 est avantageusement supérieur à l'épaisseur cumulée e₂₄+e₃₂, mesurée selon l'axe de rivet X40, du corps plat 24 et du flasque extérieur 32A. De cette manière, l'aire de la surface externe périphérique S40 du rivet perforant est importante par rapport à sa hauteur, ce qui permet un guidage optimal du rivet perforant 40 dans le flasque extérieur 32A et dans le corps plat 24 et le bon ancrage du rivet perforant 40 dans le flasque extérieur 32A et le corps plat 24. De plus au cours de l'utilisation du métier à tisser M, les efforts exercés sur la liaison entre le flasque extérieur 32A et le corps plat 24 seront répartis sur une grande surface de contact, à savoir la surface S40. Avantageusement, la tête de rivet 44 est de forme tronconique, avec un diamètre maximum D₄₄, et comprend une paroi latérale S44A convergente vers le pied de rivet 46. Le diamètre maximum D₄₄ de la tête de rivet 44 est strictement supérieur au diamètre D₄₂ du corps de rivet 42. La paroi latérale tronconique S44A est définie par un angle au sommet α. L'angle au sommet α est inférieur à 90°, de préférence est inférieur à 60°, de préférence encore est inférieur à 40°.

Dans une variante non représentée de l'invention, l'angle au somment α est supérieur à 90°.

La forme tronconique de la tête de rivet 44 augmente la surface de contact entre le flasque extérieur 32A et le rivet perforant 40 et permet une meilleure tenue mécanique du rivet perforant 40 dans le flasque extérieur 32A.

De préférence, la tête de rivet 44 comprend aussi un trou de centrage 44B permettant un centrage du rivet 40 lors de la fabrication du levier de sortie 6.

Le pied de rivet 46 comprend une face d'extrémité 46A perpendiculaire à l'axe de rivet X40. Un bord cylindrique 46B, de jonction entre la face d'extrémité 46A et la surface périphérique externe S40 du rivet perforant 40, forme un angle droit. Grâce à ce bord cylindrique 46B de jonction en angle droit, le rivet perforant 40 peut perforer de façon franche le flasque extérieur 32A et le corps plat 24 sans se déformer.

Par construction, la surface périphérique externe S40 comprend la surface périphérique externe S42 du corps de rivet 42, la paroi latérale tronconique S44A de la tête de rivet 44 et le bord cylindrique 46B du pied de rivet 46.

Une première gorge 48 est ménagée sur la surface périphérique externe S40 du rivet perforant 40. Sur l'exemple illustré, la première gorge 48 est ménagée autour du pied de rivet 46.

La première gorge 48 présente une profondeur P₄₈ mesurée perpendiculairement à l'axe de rivet X40 entre la surface externe périphérique S42 du corps de rivet 42 et le fond de la gorge 48. La profondeur P₄₈ de la gorge 48 est supérieure à 0,2 millimètres, de préférence supérieure à 0,4 millimètres, de préférence encore supérieure à 0,5 millimètres.

On note P2 un plan de référence sécant avec la première gorge 48 et perpendiculaire à l'axe de rivet X40. Le plan de référence P2 est disposé à une distance d, mesurée selon l'axe de rivet X40, de la face externe 24D du corps plat 24. La distance d est inférieure à 3 millimètres, de préférence inférieure à 2 millimètres, de préférence encore est inférieure à 1 millimètre.

Le corps plat 24 comprend, sur sa deuxième face externe 24D une empreinte d'enfoncement 50. L'empreinte d'enfoncement 50 est réalisée de sorte qu'une portion du corps plat 24 de forme complémentaire à la gorge 48 forme un bourrelet 52, par enfoncement de la portion de la matière constituant le corps plat 24 et qui est initialement présente à l'emplacement de l'empreinte d'enfoncement 50. Le bourrelet 52 du corps plat 24 est reçu dans la gorge 48 du rivet perforant 40. En d'autres termes, la première gorge 48 étant ménagée autour du pied de rivet 46, la première gorge 48 reçoit une portion du deuxième élément 24 formant un bourrelet 52 de forme complémentaire à la première gorge 48 et la face externe du deuxième élément comprend une empreinte d'enfoncement 50 de la portion du deuxième élément qui a été déplacée pour former le bourrelet 52. L'empreinte d'enfoncement 50 et le bourrelet 52 sont formés par déformation plastique du matériau du corps plat 24 lors de la mise en place du rivet perforant 40.

La coopération entre la première gorge 48 et le bourrelet 52 permet un maintien robuste du rivet perforant 40 dans le flasque extérieur 32A et le corps plat 24.

Dans des variantes non représentées, le bourrelet 52 n'occupe pas tout le volume disponible dans la première gorge 48.

L'empreinte d'enfoncement 50 est centré sur l'axe de rivet X40 et est annulaire autour de l'axe de rivet X40. L'empreinte d'enfoncement 50 présente un diamètre intérieur D₅₀ mesuré perpendiculairement à l'axe de rivet X40. Le diamètre intérieur D₅₀ de l'empreinte d'enfoncement 50 est égal au diamètre D₄₂ du corps de rivet 42.

Dans une variante non représentée, la diamètre intérieur D₅₀ de l'empreinte d'enfoncement 50 est supérieur au diamètre D₄₂ du corps de rivet 42.

L'empreinte d'enfoncement 50 définit un fond 50A. Le fond 50A de l'empreinte d'enfoncement 50 est situé, selon l'axe de rivet X40, entre la première gorge 48 et la face externe 24D du corps plat 24.

L'empreinte d'enfoncement 50 présente une profondeur P₅₀ mesurée selon l'axe de rivet X40 entre le fond 50A de l'empreinte d'enfoncement 50 et la face externe 24D du corps plat 24. La profondeur P₅₀ de l'empreinte d'enfoncement 50 est supérieure à 0,5 millimètres, de préférence est supérieure à 0,8 millimètres, de préférence encore est supérieure à 1 millimètre.

On note C un cercle circonscrit à l'empreinte d'enfoncement 50, qui est visible sur l'insert B de la figure 2. On note Rc le rayon du cercle circonscrit C. On note R₄₂=D₄₂/2 le rayon du rivet perforant 40. Un rapport entre le rayon Rc du cercle circonscrit C et le rayon R₄₂ du rivet perforant 40 est supérieur à 1,25, de préférence est supérieur à 1,5, de préférence encore est supérieur à 2. Ce rapport de dimensions permet l'enfoncement d'une partie suffisante de matière du corps plat 24 pour former le bourrelet 52 coopérant avec la gorge 48.

L'empreinte d'enfoncement 50 permet de fournir assez de matière pour que le bourrelet 52 coopère avec la gorge 48 pour permettre l'ancrage du rivet perforant 40 dans le corps plat 24, en appui par sa tête de rivet 44 contre le flasque 32A. Pour assurer la résistance mécanique du corps plat 24 qui comprend l'empreinte d'enfoncement 50, il est nécessaire que le corps plat 24 s'étende au-delà de l'empreinte d'enfoncement 50. Plus précisément, le corps plat 24 s'étend, au moins, sur une zone semi-circulaire de rayon supérieur à 1,5 fois le rayon du rivet perforant 40, de préférence supérieur à 2 fois le rayon du rivet perforant 40, de préférence encore supérieur à 3 fois le rayon du rivet perforant 40, autour de l'axe de rivet X40. Cette dimension minimale du corps plat 24 autour de l'axe de rivet X40 assure qu'il y a suffisamment de matière autour de l'empreinte d'enfoncement 50 pour ne pas fragiliser le levier de sortie 6 lors de la mise en place du rivet perforant 40.

Chaque rivet perforant 40 permettant de lier le flasque extérieur 32A au corps plat 24 est distant du centre géométrique du galet 22A correspondant, c'est-à-dire de son axe de galet X22, d'une distance D mesurée dans un plan parallèle au plan médian P1 et correspondant à la distance entre les axes X22 et X40. Avantageusement, la distance D est de moins de 80 millimètres, de préférence est de moins de 70 millimètres, de préférence encore de moins de 65 millimètres.

La qualité de la liaison entre le flasque extérieur 32A et le corps plat 24 obtenue par les rivets perforants 40 permet de placer les flasques extérieurs 32A, 32B au plus près des axes de galet X22 de sorte que la zone de recouvrement 36 qui correspond à la zone où le flasque extérieur 32A, 32B et le corps plat 24 sont en contact est minimisée. La minimisation de cette zone de recouvrement 36 permet d'utiliser des flasques extérieurs 32A, 32B de taille réduite, ce qui diminue les coûts de fabrication.

On décrit à présent le procédé de fabrication d'un levier de sortie 6 comprenant des flasques extérieurs 32A, 32B solidarisés au moyen de rivets perforants 40 comme décrit précédemment.

Le corps plat 24 du levier de sortie 6 et les flasques extérieurs 32A et 32B sont obtenus de façon connue par découpage fin de tôles d'acier.

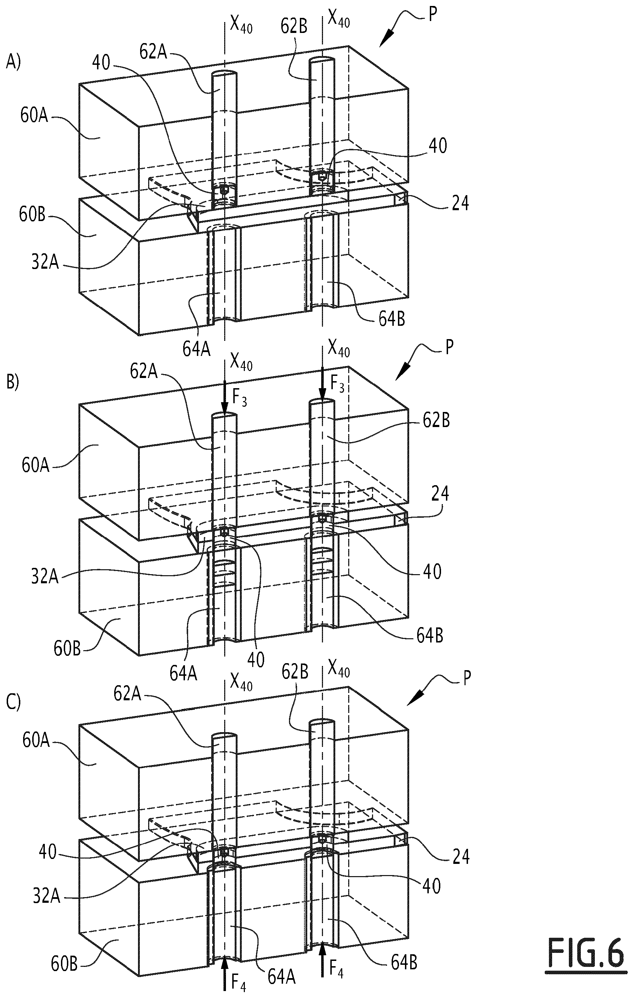

L'assemblage des flasques extérieurs 32A, 32B sur le corps plat 24 du levier de sortie 6 est réalisé en plusieurs étapes au sein d'un outillage extérieur de presse P présentant plusieurs outils. Ces étapes sont représentées sur la figure 6.

L'outillage extérieur de presse P comprend deux serre-flancs 60A, 60B, deux poinçons 62A, 62B et deux matrices 64A, 64B. Dans l'exemple illustré sur la figure 6, le premier flasque extérieur 32A est solidarisé au corps plat 24 au moyen de deux rivets perforants 40 qui sont montés en parallèle et de façon synchronisée dans l'outillage de presse P.

L'orientation de la représentation des serre-flancs 60A, 60B de l'outillage de presse P à la figure 6 n'est pas limitative. Le serre-flanc 60A peut être disposé au-dessus du serre-flanc 60B par rapport au sol, ou en-dessous du serre-flanc 60B par rapport au sol, ou encore les serre-flancs peuvent être orientés de telle sorte que l'axe X40 est parallèle au sol.

Les serre-flancs 60A, 60B sont configurés pour maintenir en contact et en position fixe le corps plat 24 et le flasque extérieur 32A. Dans l'exemple illustré, les serre-flancs 60A et 60B sont parallélépipédiques et sont en contact respectivement avec le flasque extérieur 32A et le corps plat 24 au moyen de surfaces planes. Dans des variantes non représentées, les serre-flancs 60A, 60B présentent des géométries différentes comme par exemple une surface de contact bombée.

Les poinçons 62A, 62B sont configurés pour guider chacun un rivet perforant 40 au cours de l'étape de découpe et de l'étape d'enfoncement.

Chaque matrice 64A et 64B est configurée pour repousser une portion du corps plat 24 en direction du flasque 32A lorsque le rivet perforant est en place dans les éléments 32A et 24, pour former le bourrelet 52 de forme complémentaire à la gorge du rivet perforant 40 correspondant. Les matrices 64A et 64B sont alignés respectivement avec les poinçons 62A et 62B.

La première étape représentée sur l'insert A) de la figure 6 est une étape de positionnement. Le corps plat 24 et le flasque extérieur 32A sont positionnés l'un par rapport à l'autre de telle sorte à se recouvrir pour former, après fabrication, la zone de recouvrement 36.

De préférence, le flasque extérieur 32A est en appui plan sur plan contre le corps plat 24 sur l'essentiel de la surface interne du flasque extérieur 32A. Plus précisément, le flasque extérieur 32A est en appui sur la surface externe 24C du corps plat 24, une aire de la surface de contact entre le flasque extérieur 32A et la surface externe 24C étant sensiblement égale à une aire de la face externe S32A du flasque extérieur 32A.

Par sensiblement égale, on entend que l'aire de la surface de contact entre le flasque extérieur 32A et le corps plat 24 est supérieure ou égale à 90% de l'aire de la face externe S32A du flasque extérieur 32A.

Le procédé comprend une étape préalable a0, antérieure à l'étape a), au cours de laquelle le premier élément est positionné sur le deuxième élément, la face intérieure de chacun des éléments en recouvrement sur une aire sensiblement égale de la superficie du flasque extérieur.

Lors du positionnement la zone de recouvrement 36 du corps plat 24 est supérieure à l'aire de recouvrement finale après usinage, ce qui bénéficie à la mise en position du flasque extérieur 32A sur le corps plat 24. Le corps plat 24 et le flasque extérieur 32A sont aussi positionnés dans l'outillage extérieur de presse P entre les deux serre-flancs 60A et 60B et de sorte à ce que les poinçons 62A et 62B soient en regard des emplacements désirés des rivets perforants 40. La mise en position avant rivetage est optimisée car plan sur plan selon une large zone de recouvrement. Le corps plat 24 et le corps de flasque sont d'épaisseur constante avant usinage.

La deuxième étape est une étape de découpe. Cette étape de découpe est représentée sur l'insert B) de la figure 6. Une force F3 est appliquée par la presse P suivant l'axe de rivet X40 sur les poinçons 62A et 62B de façon synchronisée. Les poinçons 62A et 62B poussent chacun un rivet perforant 40 suivant l'axe de rivet X40 de sorte à découper le premier élément, ici le flasque extérieur 32A, dans son épaisseur puis à découper le deuxième élément, ici le corps plat 24, dans son épaisseur. De manière avantageuse, chaque poinçons 62A, 62B est engagé au niveau de la tête de rivet 44 de chaque rivet 40 dans le trou de centrage central 44B de ce rivet.

La troisième étape est une étape d'enfoncement, au cours de laquelle chaque rivet perforant 40 est enfoncé jusqu'à faire affleurer le pied de rivet 46 sur la face externe 24D du corps plat 24.

La quatrième étape est une étape de repoussage et est représentée sur l'insert C) de la figure 6. Une force F4 est appliquée selon l'axe de rivet sur chaque matrice 64A, 64B de sorte à repousser une portion du corps plat 24 pour former un bourrelet 52 de forme complémentaire à la gorge 48 du rivet perforant 40 correspondant. Chaque matrice 64A, 64B marque une empreinte 50 autour du pied de rivet 46 sur la face externe 24D du corps plat 24.

Le procédé mentionné ci-dessus est mis en œuvre pour la solidarisation de chacun des flasques extérieurs 32A et 32B avec le corps plat 24. De manière avantageuse, la presse P applique les efforts de découpe sur les rivets perforants 40 de façon synchronisée, et les efforts d'enfoncement sur les rivets perforants 40 de façon synchronisée, autrement dit, au cours d'une même opération de fermeture de l'outillage de presse pour les rivets perforants 40.

On obtient ainsi un levier de sortie 6 sur lequel les flasques extérieurs 32A et 32B sont solidarisés au corps plat 24 au moyen de rivet perforants 40. La mise en place des rivets perforants 40 sans pré-perçage et le fait que l'assemblage est simultané avec l'étape de découpe assurent qu'il n'y a pas de jeu entre les rivets perforants 40, les flasques extérieurs 323A et 32B et le corps plat 24. La tenue mécanique des leviers de sortie 6 en cours d'utilisation du métier à tisser M est grandement renforcée.

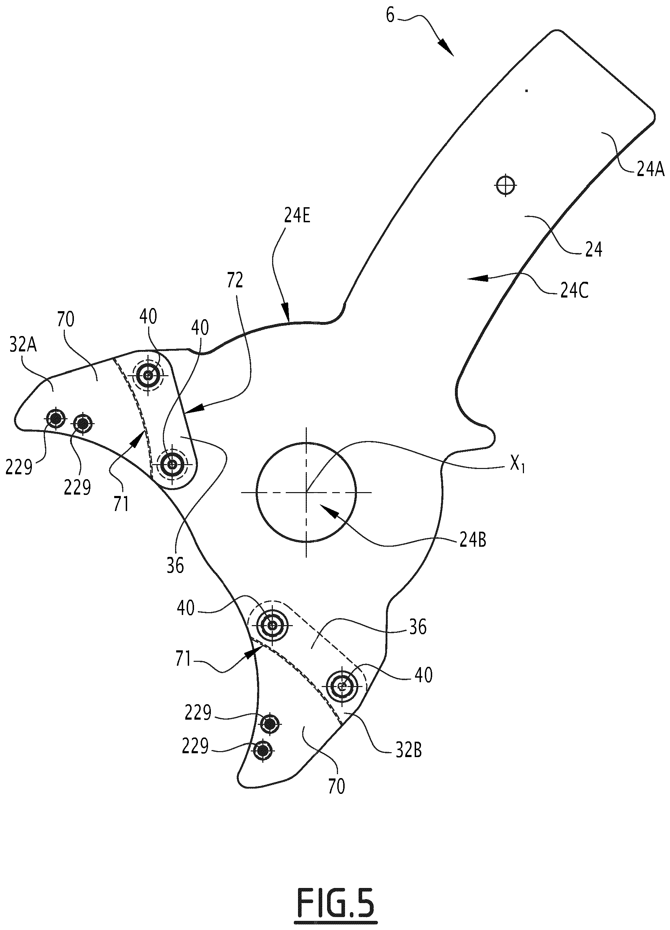

Une fois les flasques extérieurs 32A, 32B assemblés sur le corps plat 24, un espace de chape 70 est usiné par un outillage de fraisage au niveau de l'espace destiné à recevoir les galets 22A et 22B sur le corps plat 24 et sur les flasques 32A, 32B. Autrement dit, l'étape d'usinage est postérieure à l'étape de repoussage. L'espace de chape 70 est visible par arrachement sur la figure 5 et est délimité par une marche d'usinage 71.

Plus précisément une surface interne du flasque extérieur 32A en regard du galet 22A est usinée dans un plan parallèle au plan médian P1 de sorte à créer un logement creux 70A étendu sur la surface interne. De façon analogue la surface externe 24C du corps plat 24 en regard du galet 22A est usinée dans un plan parallèle au plan médian P1 de sorte à créer un logement creux 70B étendu sur la surface externe 24C. L'union des logements creux 70A et 70B forme l'espace de chape 70.

Dans l'exemple illustré, le flasque extérieur 32A présente une forme globalement triangulaire, un coté du triangle étant formé par une tranche 72 du flasque extérieur 32A, la tranche 72 étant globalement parallèle aux deux rivets 40. La tranche 72 et la marche d'usinage 71 sont ainsi situées de part et d'autre des rivets 40. La zone de recouvrement 36 définie par la marche d'usinage 71 et la tranche 72 du flasque extérieur 32A / 32B correspondant est minimale, mais suffit à résister au couple appliqué par les cames sur le levier. Cet agencement permet de rapprocher les rivets 40 du centre du galet 22A, 22B. Le recouvrement minimal est rendu possible par la forte liaison sans jeu des rivets autoperforants 40. En corolaire, la mise en œuvre de l'invention permet de fabriquer un levier de sortie 6 plus compact par rapport aux leviers de l'art antérieur, notamment avec des surfaces de recouvrement 36 plus réduites. Le levier de sortie selon l'invention est donc plus léger, et moins soumis aux forces d'inertie générées au cours de son utilisation.

Avantageusement, chaque rivet 40 est situé au plus proche de la tranche 24E du corps plat 24. Pour chaque rivet 40, on définit une distance D24 entre ce rivet et la tranche 24E du corps plat 24 comme étant une distance minimale, mesurée radialement à l'axe de rivet X40, entre l'axe de rivet X40 et la tranche 24E du corps plat 24. Ainsi, la distance D24 entre ce rivet et la tranche 24E du corps plat 24 et inférieure à 2,5 fois le rayon du rivet 40 considéré, de préférence encore inférieure à 2 fois le rayon du rivet 40. Cet agencement est particulièrement avantageux car il permet d'augmenter l'entraxe entre les deux rivets 40 associés à un même galet 22, ce qui permet de réduire la torsion des flasques 32A / 32B et du levier 6.

De façon analogue, le flasque extérieur 32B et la surface externe 24D du corps plat 24 sont usinés pour former un espace de chape 70 recevant le galet 22B.

Une fois les espaces de chape 70 usinés en regard de chaque galet 22A, 22B, les galets 22A et 22B sont mis en place et rivetés par deux rivets 229 dans les flasques extérieurs 32A, 32B et dans le corps plat 24.

Dans une variante non représentée du procédé de l'invention, dans une étape préalable à l'enfoncement du rivet, uniquement le flasque extérieur 32A, 32B est positionné dans l'outillage extérieur de la presse P. Puis, le flasque extérieur 32A, 32B est perforé par les rivets perforants 40. Le disque de matière issu de cette perforation est évacué de l'outillage de presse P. Une fois cette étape effectuée, le corps plat 24 et le flasque extérieur 32A, 32B sont empilés et le corps plat 24 est à son tour perforé par les rivets perforants 40 au travers du trou issu de la précédente perforation du flasque extérieur 32A, 32B.

Le procédé d'assemblage décrit ci-dessus est compatible avec un empilement de plus de deux éléments. Ce procédé d'assemblage est ainsi compatible par exemple avec l'assemblage d'un levier de sortie 6 qui comprend pour chaque galet suiveur deux flasques extérieurs rapportés sur le corps plat.

Le levier de sortie 6, comme décrit précédemment, est particulièrement compatible avec une mécanique d'armure décrite dans CN-215 800 175-U.

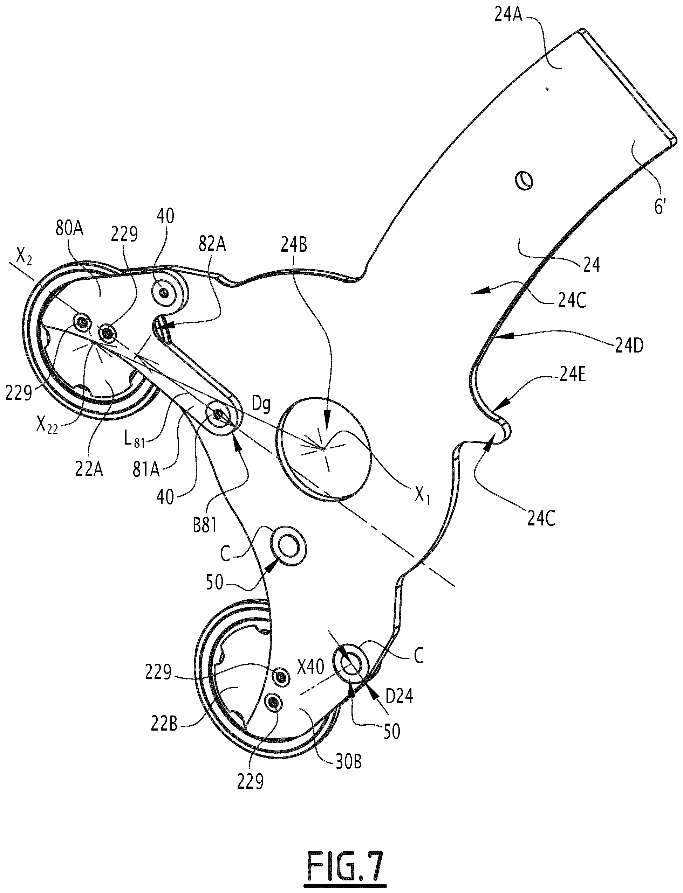

Un deuxième mode de réalisation d'un levier de sortie 6' est représenté sur la figure 7. Dans la description qui suit, les éléments analogues à ceux du premier mode de réalisation portent les mêmes références et ne sont pas décrits en détail. Si une référence est mentionnée dans la description sans être portée sur une figure ou portée sur une figure sans être mentionnée dans la description, elle désigne le même élément que celui portant la même référence dans le premier mode de réalisation. Dans ce qui suit, on décrit principalement ce qui distingue ce deuxième mode de réalisation du précédent.

Le levier de sortie 6' comprend des flasques extérieurs 80A de forme différente de celle des flasques extérieurs 32A, 32B du premier mode de réalisation. Seul le flasque extérieur 80A en regard du galet 22A est visible sur la figure 7. Les rivets perforants 40 permettant de fixer les flasques extérieurs 80A sur le corps plat 24 du levier 6 sont positionnés différemment par rapport au premier mode de réalisation.

Le flasque extérieur 80A est de forme triangulaire arrondi et comprend une patte 81A. Une encoche 82A qui définit une ouverture entre le galet 22A et le corps plat 24 est réalisée dans le flasque extérieur 80A. On comprend que dans le deuxième mode de réalisation, la zone de recouvrement du flasque extérieur 80A sur le corps plat 24 est encore plus réduite que dans le premier mode de réalisation. L'encoche 82A permet de réduire encore plus la quantité de matière en mouvement du levier de sortie 6. Ceci est rendu possible par la forte liaison sans jeu des rivets auto perforants 40.

La patte 81A s'étend entre l'encoche 82A et l'alésage central 24B suivant un axe X2 de lubrification.

On note Dg la distance mesurée dans le plan médian P1 entre l'axe de galet X22 et l'axe principal X1. On note L81 la longueur de la patte 81A le long de l'axe X2 du fond de l'encoche 82A sur l'axe X2 et le bout B81 de la patte 81A. Un rapport entre la longueur L81 de la patte 81A et la distance Dg entre l'axe de galet X22 et l'axe principal X1 est supérieur à 2/3.

La patte 81A permet de guider l'huile de la mécanique d'armure à cames 4 projetée autour du galet 22A à travers l'encoche 82A vers l'alésage central 24B recevant l'arbre des leviers 14. Cet apport en huile est bénéfique au fonctionnement des leviers de sortie 6 et de l'arbre des leviers 14 dans le temps.

L'assemblage de ce levier de sortie 6' se fait suivant le même procédé que l'assemblage du levier de sortie 6 du premier mode de réalisation.

Pour les deux modes de réalisation, dans une variante non représentée de l'invention, la première gorge 48 est ménagée sur la surface périphérique externe S42 du corps de rivet 42 autour de la tête de rivet 44 et reçoit un bourrelet du premier élément de forme complémentaire à la première gorge. Dans cette configuration le plan P2 de référence est à une distance d selon l'axe de rivet X40 de la surface externe du premier élément.

Dans une variante non représentée de l'invention, la première gorge 48 est ménagée autour du pied de rivet comme décrit précédemment et une deuxième gorge est ménagée sur la surface périphérique externe S42 du corps de rivet 42 à proximité de la tête de rivet 44. La deuxième gorge reçoit un bourrelet du premier élément de forme complémentaire à la deuxième gorge. Chaque gorge est liée à une empreinte d'enfoncement 50. L'empreinte d'enfoncement 50 liée à la deuxième gorge est réalisée par la matrice 64A, 64B selon l'axe X40 du rivet perforant 40 comprenant deux gorges 48. L'empreinte d'enfoncement liée à la première gorge est réalisée par une matrice mobile dans le serre-flanc 60A.

Dans une autre variante non représentée, les empreintes d'enfoncement 50 associées aux deux gorges 48 sont réalisées une par une par la matrice 64A, 64B selon l'axe X40 du rivet perforant 40, par retournement de l'ensemble des flasques extérieurs 32A et 32B et du corps plat 24, entre les deux étapes de matriçage des deux empreintes d'enfoncement 50.

Dans des variantes non représentées de l'invention, d'autres géométries et positions de gorges ménagées sur la surface périphérique externe des rivets perforants 40 sont possibles.

Dans une variante non représentée de l'invention, chaque flasque extérieur 32A, 32B est fixé sur le corps plat 24 au moyen de deux rivets perforants 40 tel qu'un premier rivet perforant 40 est d'abord inséré dans le flasque extérieur 32A, 32B puis dans le corps plat 24 et un deuxième rivet perforant 40 est d'abord inséré dans le corps plat 24 puis dans le flasque extérieur 32A, 32B. Dans cette configuration, le corps plat 24 et le flasque extérieur 32A, 32B comporte chacun une empreinte d'enfoncement 50.

Dans des variantes non représentées, la forme du rivet perforant 40 peut être différente, en particulier le rivet perforant 40 peut être creux ou présenter une tête de forme alternative.

Dans une variante non représentée de l'invention, le corps de levier et les flasques sont pré-percés et les rivets sont enfoncés et les bourrelets sont formés dans les gorges de rivet pour assembler le premier et le deuxième élément, sans étape préalable de découpe par le rivet. Dans ce cas, les rivets ne sont pas des rivets perforants. Ainsi, l'invention couvre le cas où les rivets n'ont pas perforé les éléments dans lesquels ils sont positionnés, ces éléments ayant été l'un ou l'autre ou tous deux perforés au préalable. L'invention couvre également le cas où les des rivets perforants ont perforé l'un ou l'autre ou les deux éléments de façon de façon partielle, par exemple dans le cas où ces éléments ont été pré-percés à un diamètre inférieur à celui des rivets.

Dans une autre variante non représentée de l'invention, le premier flasque intérieur 30A et/ou le deuxième flasque intérieur 30B est rapporté sur le corps plat 24. La tête de rivet 44 affleure la face externe du flasque intérieur et le pied de rivet 46 affleure la face externe du flasque extérieur. Les premiers et deuxièmes éléments vis-à-vis desquels la tête de rivet 44 et le pied de rivet 46 affleurent sont alors, d'une part, le premier ou le deuxième flasque extérieur 32A, 32B et, d'autre part, le premier ou le deuxième flasque intérieur 30A, 30B, ou inversement.

Dans une autre variante non représentée de l'invention, les espaces de chape ne sont pas usinés.

On comprendra que la tête de rivet affleure la face externe du premier élément et le pied de rivet affleure la face externe du second élément même si un jeu axial le long de l'axe X40 le long du rivet, d'une valeur de quelques centièmes de millimètre, puisse être constaté. Autrement dit les plans de la tête de rivet et la face externe du premier élément sont sensiblement confondus, et les plans du pied de rivet et de la face externe du second élément sont sensiblement confondus.

Pour autant que cela est techniquement réalisable, les modes de réalisation et variantes mentionnés ci-dessus peuvent être combinées entre elles, dans le cadre de l'invention telle que définie par les revendications.

## Revendications

1. Levier de sortie (6 ; 6') à galets suiveurs (22A, 22B) d'une mécanique d'armure à cames (4), le levier de sortie (6 ; 6') comprenant :
- un corps plat (24) destiné à supporter une articulation (26) avec une bielle de transmission (8) du mouvement oscillant du levier de sortie (6) à un cadre de lisses (2) et comportant :
• une première face (24C) et une deuxième face (24D) opposées et définissant entre elles un plan médian (P1),
• un alésage (24B) centré sur un axe principal (X1) destiné à recevoir un roulement (28) ou un coussinet monté sur un arbre des leviers (14) de la mécanique d'armure à cames (4),
- un premier flasque intérieur (30A) monobloc avec le corps (24) ou rapporté sur la deuxième face (24D) du corps (24) de levier;
- un deuxième flasque intérieur (30B) monobloc avec le corps (24) ou rapporté sur la première face (24C) du corps (24) de levier ;
- un premier flasque extérieur (32A), rapporté sur la première face (24C) du corps de levier (24), en regard du premier flasque intérieur (30A) ;
- un deuxième flasque extérieur (32B), rapporté sur la deuxième face (24D) du corps de levier (24), en regard du deuxième flasque intérieur (30B) ;
- un premier galet (22A) destiné à suivre une première piste (20A) d'une came (20) de la mécanique d'armure (4) et pris en chape dans un premier espace (70) ménagé entre le premier flasque extérieur (32A) et le premier flasque intérieur (30A) ;
- un deuxième galet (22B) destiné à suivre une deuxième piste (20B) de la came (20) de la mécanique d'armure (4) et pris en chape dans un deuxième espace (70) ménagé entre le deuxième flasque extérieur (32B) et le deuxième flasque intérieur (30B) ;
- au moins deux rivets (40) permettant de fixer au moins un des flasques extérieurs (32A, 32B) au corps plat (24), les rivets (40) traversant le corps du levier (24) et le flasque extérieur (32A, 32B),
**caractérisé en ce que** chaque rivet (40) comprend :
- un corps de rivet (42) en forme de solide de révolution autour d'un axe de rivet (X40) étendu entre :
• une tête de rivet (44) affleurant une face externe (24C, 24D, S32A) d'un premier élément parmi le flasque extérieur (32A, 32B) et le flasque intérieur (30A, 30B, 24),
• un pied de rivet (46) affleurant une face externe (24C, 24D, S32A) du deuxième élément parmi le flasque extérieur (32A, 32B) et le flasque intérieur (30A, 30B, 24) ;
- au moins une première gorge (48) de rivet ménagée sur une surface périphérique externe (S40) du rivet (40) dans laquelle une portion du premier (32A, 32B, 30A, 30B, 24) ou du deuxième élément (32A, 32B, 30A, 30B, 24) forme un bourrelet (52) de forme complémentaire à la première gorge (48) ;
**en ce que** le premier élément et/ou le deuxième élément (32A, 32B, 30A, 30B, 24) comprend, sur sa face externe (S32A, 24C, 24D), une empreinte d'enfoncement (50), de la portion du premier ou du deuxième élément (32A, 32B, 24) qui forme le bourrelet (52), **en ce que** l'empreinte d'enfoncement (50) est centrée sur l'axe de rivet (X40), et
**en ce que** le flasque intérieur (30A, 30B) et le flasque extérieur (32A, 32B) correspondant délimitent entre eux le premier ou le deuxième espace (70), qui est ménagé par usinage du flasque intérieur (30A, 30B) et du flasque extérieur (32A, 32B), conjointement, après la mise en place de chaque rivet (40), de sorte qu'une marche d'usinage (71) du flasque intérieur (30A, 30B) est alignée sur une marche d'usinage (71) du flasque extérieur (32A, 32B).

2. Levier de sortie (6; 6') selon la revendication 1, dans lequel :
- la tête de rivet (44) a un diamètre maximum (D44) strictement supérieur au diamètre (D42) du corps de rivet (42), et
- la première gorge (48) est ménagée autour du pied de rivet (46).

3. Levier de sortie (6 ; 6') selon la revendication 2, dans lequel :
- la tête de rivet (44) comprend une paroi latérale (S44A) tronconique convergente vers le pied de rivet (46), et
- un angle au sommet (α) de la paroi latérale (S44A) tronconique est inférieur à 90°, de préférence inférieur à 60°, de préférence inférieur à 40°.

4. Levier de sortie selon l'une quelconque des revendications 1 à 3, dans lequel :
- une deuxième gorge est ménagée sur la surface périphérique externe (S40) du rivet (40), autour du corps de rivet (42) à proximité de la tête de rivet (44), en ce que la première gorge (48) est ménagée sur la surface périphérique externe (S40) du rivet (40), autour du pied de rivet (46),
- la première gorge (48) reçoit un bourrelet (52) du deuxième élément (24, 32A, 32B), de forme complémentaire à la première gorge (48), et
- la deuxième gorge reçoit un bourrelet du premier élément (24, 32A, 32B), de forme complémentaire à la deuxième gorge.

5. Levier de sortie (6 ; 6') selon l'une quelconque des revendications 1 à 4, dans lequel une profondeur (P₄₈) de la première gorge ou d'au moins une des gorges est supérieure à 0,2 millimètres, de préférence supérieure à 0,4 millimètres, de préférence encore supérieure à 0,5 millimètres.

6. Levier de sortie (6 ; 6') selon l'une quelconque des revendications 1 à 5, dans lequel :
- l'empreinte d'enfoncement (50) est annulaire,
- l'empreinte d'enfoncement (50) présente un diamètre intérieur (D₅₀) égal au diamètre (D₄₂) du corps de rivet (42), et
- un fond de l'empreinte (50A) est disposé, le long de l'axe de rivet (X40), entre la première gorge (48) du rivet perforant (40) et la face externe (S32A, 24C, 24D) du premier et/ou du deuxième élément (32A, 32B, 24) qui comprend l'empreinte d'enfoncement (50).

7. Levier de sortie (6 ; 6') selon l'une quelconque des revendications 1 à 6, dans lequel un rapport entre le rayon (Rc) du cercle circonscrit (C) de l'empreinte d'enfoncement (50) et le rayon du rivet (R₄₂) perforant est supérieur à 1,25, de préférence supérieur à 1,5, de préférence encore supérieur à 2.

8. Levier de sortie (6 ; 6') selon l'une quelconque des revendications 1 à 7, dans lequel une profondeur (P₅₀) de l'empreinte d'enfoncement (50), mesurée selon l'axe de rivet (X40), est supérieure à 0,5 millimètres, de préférence supérieure à 0,8 millimètres, de préférence encore supérieure à 1 millimètre.

9. Levier de sortie (6 ; 6') selon l'une quelconque des revendications 1 à 8, dans lequel la face externe (24C, 24D, S32A) du premier et/ou du second élément (32A, 32B, 24) qui comprend l'empreinte d'enfoncement (50) s'étend dans une zone semi-circulaire centrée sur l'axe de rivet (X40) d'un rayon de cercle de préférence supérieur ou égal à 1,5 fois le rayon (R₄₂) du rivet (40), de préférence supérieur ou égal à 2 fois le rayon (R₄₂) du rivet (40) et de préférence encore supérieur ou égal à 3 fois le rayon (R₄₂) du rivet (40).

10. Levier de sortie (6 ; 6') selon l'une quelconque des revendications 1 à 9, dans lequel la face externe (24C, 24D, S32A) du premier élément s'étend dans une zone en quart de cercle centrée sur l'axe de rivet d'un rayon de cercle de préférence inférieur ou égal à 2,5 fois le rayon du rivet, de préférence inférieure ou égal à 2 fois le rayon du rivet, de préférence encore inférieure ou égal à 1,5 fois le rayon du rivet (40).

11. Levier de sortie (6) selon l'une quelconque des revendications 1 à 10, dans lequel
- chaque galet (22A, 22B) est centré sur un axe de galet (X22) et présente un diamètre extérieur (D22),
- pour chaque galet et pour au moins un rivet associé à ce galet fixant au moins un des flasques extérieurs (32A, 32B) au corps plat (24), un ratio entre une distance (D) entre l'axe de galet (X22) et l'axe de rivet (X40) considéré, divisé par la moitié du diamètre extérieur (D22) du galet, est inférieur à 1,8, de préférence inférieur à 1,6, de préférence encore inférieur à 1,5.

12. Leviers de sortie (6) selon l'une quelconque des revendications 1 à 11, dans lequel, pour au moins un des rivets (40), une distance minimale entre l'axe de rivet (X40) et la tranche (24E) du corps plat 24, mesurée radialement à l'axe de rivet (X40), est inférieure à 2,5 fois le rayon du rivet, de préférence encore inférieure à 2 fois le rayon du rivet (40).

13. Levier de sortie (6) selon l'une quelconque des revendications 1 à 12, dans lequel un plan de référence (P2) sécant avec la première gorge (48) est disposé à une distance (d) de la face externe (24C, 24D, S32A) du premier ou du deuxième élément (32A, 32B, 24), mesurée selon l'axe de rivet (X40), inférieure à 3 millimètres, de préférence inférieure à 2 millimètres, de préférence encore inférieure à 1 millimètre.

14. Levier de sortie (6) selon l'une quelconque des revendications 1 à 13, dans lequel le pied de rivet (46) comprend une face d'extrémité (46A) perpendiculaire à l'axe de rivet (X40) et en ce qu'un bord cylindrique (46B) de jonction entre la face d'extrémité (46A) et la surface périphérique externe (S40) du rivet (40) forme un angle droit.

15. Levier de sortie (6) selon l'une quelconque des revendications 1 à 14, dans lequel un diamètre (D₄₂) du rivet (40) est supérieur à une épaisseur cumulée (e₂₄+e₃₂), mesurée selon l'axe de rivet (X40), du corps plat (24) du levier (6) et d'un flasque extérieur (32A, 32B).

16. Levier de sortie (6) selon l'une quelconque des revendications 1 à 15, dans lequel le flasque extérieur (80A) comprend une patte (81A) qui s'étend selon un axe de lubrification (X2) et configurée pour guider du lubrifiant d'un galet (22A, 22B) vers l'alésage (24B) du corps de levier (24).

17. Levier de sortie (6) selon l'une quelconque des revendications 1 à 16, dans lequel :
- une surface périphérique externe (S42) du corps de rivet (42) comprend une première portion de surface périphérique externe (S42A) reçue dans le premier élément (32A, 32B, 24) et une deuxième portion de surface périphérique externe (S42B) reçue dans le deuxième élément (24, 32A, 32B), et
- la première portion de surface périphérique externe (S42A) et la deuxième portion de surface périphérique externe (S42B) sont concentriques et de même diamètre.

18. Levier de sortie (6) selon l'une quelconque des revendications 1 à 17, dans lequel chaque rivet est un rivet perforant (40).

19. Procédé de fabrication d'un levier de sortie (6 ; 6') selon l'une quelconque des revendications 1 à 18, le procédé de fabrication comprenant, pour un premier des rivets (40) du levier de sortie (6), au moins les étapes suivantes :
a) enfoncer le rivet (40) jusqu'à faire affleurer le pied de rivet (46) sur la face externe du deuxième élément (24C, 24D, S32A), le rivet (40) étant poussé par un outillage extérieur de presse (P) configuré pour exercer un effort de poussée (F3) sur le rivet (40) suivant l'axe de rivet (X40) ; et
b) repousser une portion du deuxième élément (32A, 32B, 24) pour former un bourrelet (52) de forme complémentaire à la gorge (48) du rivet (40) au moyen d'une matrice extérieure (64A, 64B) centrée sur l'axe de rivet (X40) et marquant une empreinte d'enfoncement (50) autour du pied de rivet (46) sur la face externe du deuxième élément (24C, 24D, S32A) et/ou une portion du premier élément (32A, 32B , 24) pour former un bourrelet (52) de forme complémentaire à la gorge (48) du rivet perforant (40) au moyen d'une matrice extérieure (64A, 64B) centrée sur l'axe de rivet (X40) et marquant une empreinte d'enfoncement (50) autour de la tête de rivet (44) sur la face externe du premier élément (24C, 24D, S32A),
dans lequel le procédé de fabrication comprend au moins les étapes préalables suivantes :
c) découper, au moyen du rivet (40) qui est un rivet perforant, le premier élément (32A, 32B, 24) dans son épaisseur, puis
d) découper, au moyen du rivet perforant (40), le deuxième élément (32A, 32B, 24) dans son épaisseur, le rivet perforant (40) étant poussé au moyen de l'outillage extérieur de presse (P) suivant l'axe de rivet (X40).
dans lequel le procédé de fabrication comprend une étape d'usinage, postérieure à l'étape b) de repoussage, au cours de laquelle on usine le premier ou le deuxième espace (70) entre le flasque intérieur (30A, 30B) et le flasque extérieur (32A, 32B) selon un plan parallèle au plan médian (P1) au moyen d'un outillage de fraisage, de sorte qu'une marche d'usinage (71) du flasque intérieur (30A, 30B) est alignée sur une marche d'usinage (71) du flasque extérieur (32A, 32B).

20. Procédé de fabrication selon la revendication 19, dans lequel le procédé de fabrication comprend une étape supplémentaire, postérieure à l'étape c) et antérieure à l'étape d), l'étape supplémentaire consistant à positionner le deuxième élément (32A, 32B, 24) sur le premier élément (32A, 32B, 24) au niveau d'une zone de recouvrement (36) dans l'outillage extérieur de presse (P).

21. Procédé de fabrication selon la revendication 19, dans lequel le procédé comprend une étape préalable a0, antérieure à l'étape c), au cours de laquelle le premier élément est positionné sur le deuxième élément en appui plan sur plan, une aire de la surface de contact entre le premier élément et le deuxième élément étant sensiblement égale de la superficie du flasque extérieur.

22. Procédé de fabrication selon l'une quelconque des revendications 19 à 21, dans lequel le procédé de fabrication comprend des étapes de découpage, d'enfoncement et de repoussage analogue aux étapes a) à d) pour un deuxième rivet (40), qui est un rivet perforant positionné à distance du premier rivet (40).

## Patentansprüche

1. Ausgangshebel (6; 6') mit Nachlaufrollen (22A, 22B) eines Exzenterantriebs (4), der Ausgangshebel (6; 6') umfassend:
- einen flachen Körper (24), der dazu bestimmt ist, ein Gelenk (26) mit einer Übertragungsstange (8) der Schwenkbewegung des Ausgangshebels (6) auf einen Litzenrahmen (2) zu tragen, und umfassend:
• eine erste Seite (24C) und eine zweite Seite (24D), die einander gegenüber sind und untereinander eine mittlere Ebene (P1) definieren,
• eine Bohrung (24B), die auf einer Hauptachse (X1) zentriert ist, um ein Lager (28) oder eine Lagerbuchse aufzunehmen, die auf einer Welle der Hebel (14) des Exzenterantriebs (4) montiert ist,
- einen ersten inneren Flansch (30A), der mit dem Körper (24) einstückig ist oder an der zweiten Seite (24D) des Körpers (24) des Hebels angebracht ist;
- einen zweiten inneren Flansch (30B), der mit dem Körper (24) einstückig ist oder an der ersten Seite (24C) des Körpers (24) des Hebels angebracht ist;
- einen ersten äußeren Flansch (32A), der an der ersten Seite (24C) des Körpers (24) des Hebels gegenüber dem ersten inneren Flansch (30A) angebracht ist;
- einen zweiten äußeren Flansch (32B), der an der zweiten Seite (24D) des Körpers (24) des Hebels gegenüber dem zweiten inneren Flansch (30B) angebracht ist;
- eine erste Rolle (22A), die dazu bestimmt ist, einer ersten Spur (20A) eines Nocken (20) des Exzenterantriebs (4) zu folgen, und die in einem ersten Raum (70), der zwischen dem ersten äußeren Flansch (32A) und dem ersten inneren Flansch (30A) ausgebildet ist, eingespannt ist;
- eine zweite Rolle (22B), die dazu bestimmt ist, einer zweiten Spur (20B) des Nocken (20) des Exzenterantriebs (4) zu folgen, und die in einem zweiten Raum (70), der zwischen dem zweiten äußeren Flansch (32B) und dem zweiten inneren Flansch (30B) ausgebildet ist, eingespannt ist;
- mindestens zwei Nieten (40), die es ermöglichen, mindestens einen der äußeren Flansche (32A, 32B) an dem flachen Körper (24) zu befestigen, wobei die Nieten (40) den Körper des Hebels (24) und den äußeren Flansch (32A, 32B) durchqueren,
**dadurch gekennzeichnet, dass** jeder Niet (40) Folgendes umfasst:
- einen Nietkörper (42) in Form eines Rotationsfestkörpers um eine Nietachse (X40), der sich zwischen Folgendem erstreckt:
• einen Nietkopf (44), der bündig mit einer Außenfläche (24C, 24D, S32A) eines ersten Elements von dem äußeren Flansch (32A, 32B) und dem inneren Flansch (30A, 30B, 24) abschließt,
• einen Nietfuß (46), der bündig mit einer Außenfläche (24C, 24D, S32A) des zweiten Elements von dem äußeren Flansch (32A, 32B) und dem inneren Flansch (30A, 30B, 24) abschließt;
- mindestens eine erste Nietnut (48), die an einer äußeren Umfangsfläche (S40) des Niets (40) ausgebildet ist, wobei ein Abschnitt des ersten (32A, 32B, 30A, 30B, 24) oder des zweiten Elements (32A, 32B, 30A, 30B, 24) einen Wulst (52) bildet, dessen Form komplementär zu der ersten Nut (48) ist;
dass das erste Element und/oder das zweite Element (32A, 32B, 30A, 30B, 24) auf seiner Außenseite (S32A, 24C, 24D) eine Eintreibvertiefung (50) des Abschnitts des ersten oder des zweiten Elements (32A, 32B, 24) umfasst, der den Wulst (52) bildet, dass die Eintreibvertiefung (50) auf der Nietachse (X40) zentriert ist, und
dass der innere Flansch (30A, 30B) und der entsprechende äußere Flansch (32A, 32B) untereinander den ersten oder den zweiten Raum (70) begrenzen, der durch gemeinsames Bearbeiten des inneren Flanschs (30A, 30B) und des äußeren Flanschs (32A, 32B) nach dem Anbringen jedes Niets (40) ausgebildet wird, sodass eine Bearbeitungsstufe (71) des inneren Flanschs (30A, 30B) mit einer Bearbeitungsstufe (71) des äußeren Flanschs (32A, 32B) fluchtet.

2. Ausgangshebel (6; 6') nach Anspruch 1, wobei:
- der Nietkopf (44) einen maximalen Durchmesser (D44) aufweist, der strikt größer als der Durchmesser (D42) des Nietkörpers (42) ist, und
- die erste Nut (48) um den Nietfuß (46) ausgebildet ist.

3. Ausgangshebel (6; 6') nach Anspruch 2, wobei:
- der Nietkopf (44) eine kegelstumpfförmige Seitenwand (S44A) umfasst, die zu dem Nietfuß (46) hin konvergiert, und
- ein Winkel an der Spitze (α) der kegelstumpfförmigen Seitenwand (S44A) kleiner als 90°, vorzugsweise kleiner als 60°, vorzugsweise kleiner als 40°, ist.

4. Ausgangshebel nach einem der Ansprüche 1 bis 3, wobei:
- eine zweite Nut auf der äußeren Umfangsfläche (S40) des Niets (40) um den Nietkörper (42) in der Nähe des Nietkopfs (44) ausgebildet ist, dadurch, dass die erste Nut (48) auf der äußeren Umfangsfläche (S40) des Niets (40) um den Nietfuß (46) ausgebildet ist,
- die erste Nut (48) einen Wulst (52) des zweiten Elements (24, 32A, 32B) aufnimmt, dessen Form komplementär zu der ersten Nut (48) ist, und
- die zweite Nut einen Wulst des ersten Elements (24, 32A, 32B) aufnimmt, dessen Form komplementär zu der der zweiten Nut ist.

5. Ausgangshebel (6; 6') nach einem der Ansprüche 1 bis 4, wobei eine Tiefe (P₄₈) der ersten Nut oder mindestens einer der Nuten größer als 0,2 Millimeter, vorzugsweise größer als 0,4 Millimeter, bevorzugter größer als 0,5 Millimeter ist.

6. Ausgangshebel (6; 6') nach einem der Ansprüche 1 bis 5, wobei:
- die Eintreibvertiefung (50) ringförmig ist,
- die Eintreibvertiefung (50) einen Innendurchmesser (D₅₀) aufweist, der gleich der Durchmesser (D42) des Nietkörpers (42) ist, und
- ein Boden der Eintreibvertiefung (50A) entlang der Nietachse (X40) zwischen der ersten Nut (48) des Stanzniets (40) und der Außenfläche (S32A, 24C, 24D) des ersten und/oder zweiten Elements (32A, 32B, 24) angeordnet ist, das die Eintreibvertiefung (50) umfasst.

7. Ausgangshebel (6; 6') nach einem der Ansprüche 1 bis 6, wobei ein Verhältnis zwischen dem Radius (Rc) des umschriebenen Kreises (C) der Eintreibvertiefung (50) und dem Radius des Stanzniets (R₄₂) größer als 1,25, vorzugsweise größer als 1,5, bevorzugter größer als 2, ist.

8. Ausgangshebel (6; 6') nach einem der Ansprüche 1 bis 7, wobei eine Tiefe (P₅₀) der Eintreibvertiefung (50), gemessen entlang der Nietachse (X40), größer als 0,5 Millimeter, vorzugsweise größer als 0,8 Millimeter, bevorzugter größer als 1 Millimeter ist.

9. Ausgangshebel (6 ; 6') nach einem der Ansprüche 1 bis 8, wobei sich die Außenseite (24C, 24D, S32A) des ersten und/oder zweiten Elements (32A, 32B, 24), das die Eintreibvertiefung (50) umfasst, in einem halbkreisförmigen, auf die Nietachse (X40) zentrierten Bereich mit einem Kreisradius erstreckt, der vorzugsweise größer oder gleich das 1,5-fache des Radius (R₄₂) des Niets (40), vorzugsweise größer oder gleich das 2-fache des Radius (R₄₂) des Niets (40) und weiter vorzugsweise größer oder gleich das 3-fache des Radius (R₄₂) des Niets (40) ist.

10. Ausgangshebel (6; 6') nach einem der Ansprüche 1 bis 9, wobei sich die Außenfläche (24C, 24D, S32A) des ersten Elements in einem viertelkreisförmigen, auf die Nietachse zentrierten Bereich mit einem Kreisradius erstreckt, der vorzugsweise kleiner oder gleich das 2,5-fache des Nietradius, vorzugsweise kleiner oder gleich das 2-fache des Nietradius, bevorzugter kleiner oder gleich das 1,5-fache des Radius des Niets (40) ist.

11. Ausgangshebel (6) nach einem der Ansprüche 1 bis 10, wobei
- jede Rolle (22A, 22B) auf einer Rollenachse (X22) zentriert ist und einen Außendurchmesser (D22) aufweist,
- für jede Rolle und für mindestens einen Niet, der mit dieser Rolle assoziiert ist, der mindestens einen der äußeren Flansche (32A, 32B) an dem flachen Körper (24) befestigt, ein Verhältnis zwischen einem Abstand (D) zwischen der Rollenachse (X22) und der jeweiligen Nietachse (X40), geteilt durch die Hälfte des Außendurchmessers (D22) der Rolle, kleiner als 1,8, vorzugsweise kleiner als 1,6, bevorzugter kleiner als 1,5, ist.

12. Ausgangshebel (6) nach einem der Ansprüche 1 bis 11, wobei bei mindestens einem der Nieten (40) ein Mindestabstand zwischen der Nietachse (X40) und der Kante (24E) des flachen Körpers 24, gemessen radial zu der Nietachse (X40), kleiner als das 2,5-fache des Nietradius, bevorzugter kleiner als das 2-fache des Radius des Niets (40), ist.

13. Ausgangshebel (6) nach einem der Ansprüche 1 bis 12, wobei eine Bezugsebene (P2), die die erste Nut (48) schneidet, in einem Abstand (d) von der Außenfläche (24C, 24D, S32A) des ersten oder zweiten Elements (32A, 32B, 24), gemessen entlang der Nietachse (X40), von weniger als 3 Millimetern, vorzugsweise weniger als 2 Millimetern, bevorzugter weniger als 1 Millimeter, angeordnet ist.

14. Ausgangshebel (6) nach einem der Ansprüche 1 bis 13, wobei der Nietfuß (46) eine Endfläche (46A) senkrecht zu der Nietachse (X40) umfasst und dass ein zylindrischer Rand (46B) der Verbindung zwischen der Endfläche (46A) und der äußeren Umfangsfläche (S40) des Niets (40) einen rechten Winkel bildet.

15. Ausgangshebel (6) nach einem der Ansprüche 1 bis 14, wobei ein Durchmesser (D₄₂) des Niets (40) größer ist als eine kumulierte Stärke (e₂₄+e₃₂) gemessen entlang der Nietachse (X40), des flachen Körpers (24) des Hebels (6) und eines äußeren Flanschs (32A, 32B).

16. Ausgangshebel (6) nach einem der Ansprüche 1 bis 15, wobei der äußere Flansch (80A) eine Lasche (81 A) umfasst, die sich entlang einer Schmierachse (X2) erstreckt und konfiguriert ist, um Schmiermittel von einer Rolle (22A, 22B) zu der Bohrung (24B) des Körpers (24) des Hebels zu führen.

17. Ausgangshebel (6) nach einem der Ansprüche 1 bis 16, wobei:
- eine äußere Umfangsfläche (S42) des Nietkörpers (42) einen ersten äußeren Umfangsflächenabschnitt (S42A), der in dem ersten Element (32A, 32B, 24) aufgenommen ist, und einen zweiten äußeren Umfangsflächenabschnitt (S42B), der in dem zweiten Element (24, 32A, 32B) aufgenommen ist, umfasst, und
- der erste äußere Umfangsflächenabschnitt (S42A) und der zweite äußere Umfangsflächenabschnitt (S42B) konzentrisch und mit gleichem Durchmesser sind.

18. Ausgangshebel (6) nach einem der Ansprüche 1 bis 17, wobei jeder Niet ein Stanzniet (40) ist.

19. Verfahren zur Herstellung eines Ausgangshebels (6; 6') nach einem der Ansprüche 1 bis 18, wobei das Herstellungsverfahren für einen ersten der Nieten (40) des Ausgangshebels (6) mindestens die folgenden Schritte umfasst:
a) Eintreiben des Niets (40), bis der Nietfuß (46) bündig mit der Außenseite des zweiten Elements (24C, 24D, S32A) ist, wobei der Niet (40) durch ein äußeres Presswerkzeug (P) gedrückt wird, das konfiguriert ist, um eine Druckkraft (F3) auf den Niet (40) entlang der Nietachse (X40) auszuüben; und
b) Drücken eines Teils des zweiten Elements (32A, 32B, 24), um einen Wulst (52) mit einer zur Nut (48) des Niets (40) komplementären Form zu bilden, mittels einer äußeren Matrize (64A, 64B), die auf der Nietachse (X40) zentriert ist und eine Eintreibvertiefung (50) um den Nietfuß (46) auf der Außenseite des zweiten Elements (24C, 24D, S32A) und/oder einen Abschnitt des ersten Elements (32A, 32B, 24), um einen Wulst (52) mit einer Form zu bilden, die komplementär zu der Nut (48) des Stanzniets (40) ist, mittels einer äußeren Matrize (64A, 64B), die auf der Nietachse (X40) zentriert ist und eine Eintreibvertiefung (50) um den Nietkopf (44) auf der Außenseite des ersten Elements (24C, 24D, S32A) markiert,
wobei das Herstellungsverfahren mindestens die folgenden vorherigen Schritte umfasst:
c) Zuschneiden, mittels des Niets (40), der ein Stanzniet ist, des ersten Elements (32A, 32B, 24) in seine Stärke, und dann
d) Zuschneiden, mittels des Stanzniets (40), des zweiten Elements (32A, 32B, 24) in seine Stärke, wobei der Stanzniet (40) mittels des äußeren Presswerkzeugs (P) entlang der Nietachse (X40) gedrückt wird.
wobei das Herstellungsverfahren einen Bearbeitungsschritt nach dem Schritt b) eines Drückens umfasst, bei dem der erste oder der zweite Raum (70) zwischen dem inneren Flansch (30A, 30B) und dem äußeren Flansch (32A, 32B) gemäß einer Ebene parallel zu der mittleren Ebene (P1) mittels eines Fräswerkzeugs bearbeitet wird, sodass eine Bearbeitungsstufe (71) des inneren Flanschs (30A, 30B) mit einer Bearbeitungsstufe (71) des äußeren Flanschs (32A, 32B) fluchtet.

20. Herstellungsverfahren nach Anspruch 19, wobei das Herstellungsverfahren einen zusätzlichen Schritt nach Schritt c) und vor Schritt d) umfasst, wobei der zusätzliche Schritt ein Positionieren des zweiten Elements (32A, 32B, 24) auf dem ersten Element (32A, 32B, 24) an einem Überlappungsbereich (36) in dem äußeren Presswerkzeug (P) umfasst.

21. Herstellungsverfahren nach Anspruch 19, wobei das Verfahren einen vorherigen Schritt a0 vor Schritt c) umfasst, bei dem das erste Element auf dem zweiten Element in einer flächigen Anlage positioniert wird, wobei eine Fläche der Kontaktfläche zwischen dem ersten Element und dem zweiten Element im Wesentlichen gleich die Fläche des äußeren Flanschs ist.

22. Herstellungsverfahren nach einem der Ansprüche 19 bis 21, wobei das Herstellungsverfahren die Schritte eines Zuschneidens, Eintreibens und Drückens analog zu den Schritten a) bis d) für einen zweiten Niet (40) umfasst, was ein Stanzniet ist, der in einem Abstand zu dem ersten Niet (40) positioniert wird.

## Claims

1. An output lever (6; 6') with cam followers (22A, 22B) of a cam shedding mechanism (4), the output lever (6; 6') comprising:
- a flat body (24) for supporting an articulation (26) with a transmission rod (8) of the rocker movement of the output lever (6) to a heddle frame (2) and including:
• a first face (24C) and a second face (24D) opposite each other and defining a median plane (P1) therebetween,
• a bore (24B) centered on a main axis (X1) intended to accommodate a bearing (28) or a bearing bush mounted on a shaft of the levers (14) of the cam shedding mechanism (4),
- a first inner flange (30A) integral with the body (24) or directly mounted on the second face (24D) of the lever body (24);
- a second inner flange (30B) integral with the body (24) or directly mounted on the first face (24C) of the lever body (24);
- a first outer flange (32A), directly mounted on the first face (24C) of the lever body (24), facing the first inner flange (30A);
- a second outer flange (32B), directly mounted on the second face (24D) of the lever body (24), opposite the second inner flange (30B);
- a first roller (22A) intended to follow a first track (20A) of a cam (20) of the shedding mechanism (4) and taken held in a clevis in a first space (70) provided between the first outer flange (32A) and the first inner flange (30A);
- a second roller (22B) intended to follow a second track (20B) of the cam (20) of the shedding mechanism (4) and held in a clevis in a second space (70) provided between the second outer flange (32B) and the second inner flange (30B);
- at least two rivets (40) for fastening at least one of the outer flanges (32A, 32B) to the flat body (24), the rivets (40) extending through the lever body (24) and the outer flange (32A, 32B),
**characterized in that** each rivet (40) comprises:
- a rivet body (42) in the form of a solid of revolution around a rivet axis (X40) extended between:
• a rivet head (44) flush with an outer face (24C, 24D, S32A) of a first element amongst the outer flange (32A, 32B) and the inner flange (30A, 30B, 24),
• a rivet foot (46) flush with an outer face (24C, 24D, S32A) of the second element amongst the outer flange (32A, 32B) and the inner flange (30A, 30B, 24);
- at least a first rivet throat (48) provided on an outer peripheral surface (S40) of the rivet (40) wherein a portion of the first (32A, 32B, 30A, 30B, 24) or the second (32A, 32B, 30A, 30B, 24) element forms a bead (52) with a shape matching the first throat (48);
**in that** the first and/or second elements (32A, 32B, 30A, 30B, 24) comprise, on the outer face (S32A, 24C, 24D) thereof, a driven-in imprint (50) for driving in the portion of the first or second element (32A, 32B, 24) which forms the bead (52),
**in that** the driven-in imprint (50) is centered on the rivet axis (X40), and
**in that in that** the inner flange (30A, 30B) and the corresponding outer flange (32A, 32B) together define the first or second space (70), which is formed by machining the inner flange (30A, 30B) and the outer flange (32A, 32B) together after each rivet (40) has been set, in such a way that a machined step (71) on the inner flange (30A, 30B) is aligned with a machined step (71) on the outer flange (32A, 32B).

2. The output lever (6; 6') according to claim 1, wherein:
- the rivet head (44) has a maximum diameter (D44) strictly greater than the diameter (D42) of the rivet body (42), and
- the first throat (48) is formed around the rivet foot (46).

3. The output lever (6; 6') according to claim 2, wherein:
- The rivet head (44) comprises a frustoconical sidewall (S44A) converging toward the rivet foot (46), and
- an apex angle (α) of the frustoconical sidewall (S44A) is less than 90°, preferably less than 60°, preferably less than 40°.

4. The output lever according to any one of claims 1 to 3, wherein:
- a second throat is formed on the outer peripheral surface (S40) of the rivet (40) around the rivet body (42) in the vicinity of the rivet head (44), in that the first throat (48) is formed on the outer peripheral surface (S40) of the rivet (40), around the rivet foot (46),
- the first throat (48) accommodates a bead (52) of the second element (24, 32A, 32B) with a shape matching the first throat (48), and
- the second throat accommodates a bead of the first element (24, 32A, 32B), with a shape matching the second throat.

5. The output lever (6; 6') according to any one of claims 1 to 4, wherein a depth (P₄₈) of the first throat or at least one of the throats is greater than 0.2 millimeters, preferably greater than 0.4 millimeters, or again preferably greater than 0.5 millimeters.

6. The output lever (6; 6') according to any one of claims 1 to 5, wherein:
- the driven-in imprint (50) is annular,
- the driven-in imprint (50) has an internal diameter (D₅₀) equal to the diameter (D₄₂) of the rivet body (42), and
- a bottom of the cavity (50A) is arranged along the rivet axis (X40) between the first throat (48) of the drilling rivet (40) and the outer face (S32A, 24C, 24D) of the first and/or second element (32A, 32B, 24) which comprises the driven-in imprint (50).

7. The output lever (6; 6') according to any one of claims 1 to 6, wherein a ratio between the radius (Rc) of the circumscribed circle (C) of the driven-in imprint (50) and the radius of the drilling rivet (R₄₂) is greater than 1.25, preferably greater than 1.5, or again preferably greater than 2.

8. The output lever (6; 6') according to any one of claims 1 to 7, wherein a depth (P₅₀) of the driven-in imprint (50), measured along the rivet axis (X40), is greater than 0.5 millimeters, preferably greater than 0.8 millimeters, or again preferably greater than 1 millimeter.

9. The output lever (6; 6') according to any one of claims 1 to 8, wherein the outer face (24C, 24D, S32A) of the first and/or second member (32A, 32B, 24) which comprises the driven-in imprint (50) extends in a semicircular area centered on the rivet axis (X40) with a circle radius preferably greater than or equal to 1.5 times the radius (R₄₂) of the rivet (40), preferably greater than or equal to 2 times the radius (R₄₂) of the rivet (40) and or again preferably greater than or equal to 3 times the radius (R₄₂) of the rivet (40).

10. The output lever (6; 6') according to any one of claims 1 to 9, wherein the outer face (24C, 24D, S32A) of the first element extends in a quarter-circle area centered on the rivet axis with a circle radius preferably less than or equal to 2.5 times the radius of the rivet, preferably less than or equal to 2 times the radius of the rivet, or again preferably less than or equal to 1.5 times the radius of the rivet (40).

11. The output lever (6) according to any one of claims 1 to 10, wherein:
- each roller (22A, 22B) is centered on a roller axis (X22) and has an outer diameter (D22),
- for each roller and for at least one rivet associated with the roller fastening at least one of the outer flanges (32A, 32B) to the flat body (24), a ratio between a distance (D) between the roller axis (X22) and the rivet axis (X40) considered, divided by half the outer diameter (D22) of the roller, is less than 1.8, preferably less than 1.6, or again preferably less than 1.5.

12. The output levers (6) according to any one of claims 1 to 11, wherein, for at least one of the rivets (40), a minimum distance between the rivet axis (X40) and the edge (24E) of the flat body (24), measured radially to the rivet axis (X40), is less than 2.5 times the radius of the rivet, or again preferably less than 2 times the radius of the rivet (40).

13. The output lever (6) according to any one of claims 1 to 12, wherein a reference plane (P2) intersecting with the first throat (48) is arranged at a distance (D) from the outer face (24C, 24D, S32A) of the first or of the second element (32A, 32B, 24), measured along the rivet axis (X40), less than 3 millimeters, preferably less than 2 millimeters, or again preferably less than 1 millimeter.

14. The output lever (6) according to any one of claims 1 to 13, wherein the rivet foot (46) has an end face (46A) perpendicular to the rivet axis (X40) and in that a cylindrical edge (46B) joining the end face (46A) and the outer peripheral surface (S40) of the rivet (40) forms a right angle.

15. The output lever (6) according to any one of claims 1 to 14, wherein a diameter (D₄₂) of the rivet (40) is greater than a cumulative thickness (e₂₄+e₃₂), measured along the rivet axis (X40), of the flat body (24) of the lever (6) and of an outer flange (32A, 32B).

16. An output lever (6) according to any one of claims 1 to 15, wherein the outer flange (80A) comprises a lug (81A) extending along a lubrication axis (X2) and configured to guide lubricant from a roller (22A, 22B) to the bore (24B) of the lever body (24).

17. The output lever (6) according to any one of claims 1 to 16, wherein:
- an outer peripheral surface (S42) of the rivet body (42) comprises a first outer peripheral surface portion (S42A) accommodated in the first element (32A, 32B, 24) and a second outer peripheral surface portion (S42B) accommodated in the second element (24, 32A, 32B), and
- the first outer peripheral surface portion (S42A) and the second outer peripheral surface portion (S42B) are concentric and have the same diameter.

18. The output lever (6) according to any one of claims 1 to 17, wherein the rivet is a drilling rivet (40).

19. A method of manufacturing an output lever (6; 6') according to any one of claims 1 to 18, the manufacturing method comprising, fora first of the rivets (40) of the output lever (6), at least the following steps:
a) driving in the rivet (40) until the rivet foot (46) is flush with the outer face of the second element (24C, 24D, S32A), the rivet (40) being pushed by an outer press tool (P) configured to exert a pushing force (F3) on the rivet (40) along the rivet axis (X40); and
b) push back a portion of the second member (32A, 32B, 24) to form a bead (52) with a shape matching the throat (48) of the rivet (40) by means of an outer die (64A, 64B) centered on the rivet axis (X40) and marking a driven-in imprint (50) around the rivet foot (46) on the outer face of the second element (24C, 24D, S32A) and/or a portion of the first element (32A, 32B, 24) to form a bead (52) with a shape matching the throat (48) of the drilling rivet (40) by means of an outer die (64A, 64B) centered on the rivet axis (X40) and marking a driven-in imprint (50) around the rivet head (44) on the outer face of the first element (24C, 24D, S32A),
wherein the manufacturing method comprises at least the following preliminary steps:
c) cutting, with the rivet (40) which is a drilling rivet, the first element (32A, 32B, 24) through thickness thereof, then
d) cutting, with the drilling rivet (40), the second element (32A, 32B, 24) into the thickness thereof, the drilling rivet (40) being pushed by means of the outer press tool (P) along the rivet axis (X40),
wherein the manufacturing method comprises a machining step, subsequent to the back compression step b), during which the first or second space (70) is machined between the inner flange (30A, 30B) and the outer flange (32A, 32B) in a plane parallel to the median plane (P1), by means of a milling tool, in such a way that a machined step (71) on the inner flange (30A, 30B) is aligned with a machined step (71) on the outer flange (32A, 32B).

20. The manufacturing method according to claim 19, wherein the manufacturing method comprises a further step, subsequent to step c) and prior to step d), the further step of positioning the second element (32A, 32B, 24) on the first element (32A, 32B, 24) at an overlap area (36) in the outer press tool (P).

21. The manufacturing method according to claim 19, wherein the method comprises a prior step a0, prior to step c), in which the first element is positioned on the second element in plane-to-plane support, an area of the contact surface between the first element and the second element being substantially equal to the surface area of the outer flange.

22. The manufacturing method according to any one of claims 19 to 21, wherein the manufacturing method comprises cutting, driving-in and back compression steps similar to steps a) to d) for a second rivet (40), which is a drilling rivet positioned away from the first rivet (40).
